# EUROPEAN PATENT SPECIFICATION

(11) **EP 4 370 231 B1**
(45) Date of publication and mention of the grant of the patent: **02.09.2026**
(21) Application number: 22753641.4
(22) Date of filing: 15.07.2022
(51) Int. Cl.: B01D 46/00, B01D 39/16

(54) **AIR FILTER AND METHOD FOR MANUFACTURING AN AIR FILTER**
LUFTFILTER UND VERFAHREN ZUR HERSTELLUNG EINES LUFTFILTERS
FILTRE À AIR ET PROCÉDÉ DE FABRICATION D'UN FILTRE À AIR

(30) Priority: 15.07.2021 GB 202110181
(43) Date of publication of application: 22.05.2024
(73) Proprietor: ALSTOM Holdings, 93400 Saint-Ouen-sur-Seine (FR); Filtration Control Ltd, Brackmills, Northampton NN4 7PL (GB)
(72) Inventor: PALMISANO, Domenico, 59700 Marcq en Baroeul (FR); COMPAGNON, Damien, 12205 Berlin (DE); HUGHES, Adam, Northampton Northamptonshire NN47PL (GB)
(74) Representative: Ramrath, Lukas
(86) International application number: PCT/EP2022/069870
(87) International publication number: WO 2023/285659

(56) References cited:
- US-A- 4 115 082
- US-A- 5 037 455
- US-A- 5 692 603
- US-B2- 6 924 326

## Description

The invention relates to an air filter for an air treatment system and method for manufacturing such an air filter.

US 6,924,326B2 discloses a passive low-cost electrostatic filter created from an ordinary low-cost non-electrostatic disposable filter. The document discloses apply a water-based liquid formulation to a non-electrostatic foam filter to turn said filter into a passive electrostatic filter.

US 5,336,299B2 discloses an air conditioner filter. Charged elements of this filter are provided by poly glass walls.

US 5,037,455 A discloses an air filter is provided which substantially eliminates or prevents the disadvantages and problems associated with prior electrostatic air filters.

US 5,692,603 A discloses a toothbrush case which provides a hygienic environment therein so as to minimize contamination of the bristles of a toothbrush within the case.

US 4,115,082 A discloses an air cleaner assembly of the flow-through type.

There is a need to further improve the filtering of particles, namely VOC (volatile organic compound) particles, more particular CO (carbon monoxide) particles, SO2 (sulfur dioxide) particles, NOx (nitrogen oxide) particles, POC (particulate organic carbon) particles and microorganism, while a simple provisioning of the air filter is achieved.

This technical problem is solved by the subject-matter with the features of the independent claims. Further embodiments of the invention are provided by the subject-matter with the features of the sub claims.

An air filter for an air treatment system is proposed. The air filter can in particular be an air filter of a vehicle. The vehicle can in particular be a rail vehicle. It is, however, also possible that the vehicle is an automotive vehicle, e.g. a passenger car or bus. It is, however, also possible that the air filter is used in stationary applications. In this case, the air filter can be an air filter of a building, of a machine such as a production machine or can be used in any other application which requires the filtration of air.

The air treatment system can in particular be an air conditioning system (AC system) or HVAC system (heating, ventilation, air conditioning system). The air filter may replace currently used filters. For doing so, it may comprise the similar dimensions and/or may be installable in same positions and/or receiving regions as currently used filters. While such currently used filters may substantially provide dust removal functions, the presently disclosed new type of filter advantageously provides improved filtering effects.

The new type of filter advantageously may require no or minimal hardware modifications or adjustments on the part of the vehicle and in particular of its air treatment system (such as its HVAC system). Further, it can be easy to install with little or no training, in particular when installing just like currently used (only dust-) filters.

The air filter comprises at least one foam filter element. The foam filter element can be a part of a foam element. In this case, the foam element can comprise, in addition to the foam filter element, at least one more foam sub element. The foam filter element can be made of porous material.

The foam element or the foam filter element can e.g. be a foam block or can have a block shape. The air filter provides an air inlet section or side for unfiltered air. Further, the air filter provides an air outlet section or side for the filtered air. The air flow through the filter is directed from the inlet section to the outlet section. In case of a foam block, the inlet section can be provided by a front surface of the block and the outlet section by the rear surface of the block.

Further, the foam filter material is or comprises a material with inherent electrostatic triboelectric charging characteristics. The foam material can provide a passive electrostatic filter material. This means that air friction of the air flowing through the foam filter material will develop a static charge of the foam filter material, i.e. the foam filter material becomes electrically charged due to the air friction of the air flowing through the foam filter material. The foam filter material can be chosen such that the higher the friction, the higher the electrical charge which is developed. The air friction can positively correlate with the pressure drop across the air filter, i.e. the higher the pressure drop, the higher the air friction effect. The pressure drop depends on the coefficient of drag of the foam filter material which, in turn, depends on the density, e.g. on the pores per inch, and the thickness of the foam element.

Providing the foam filter material with inherent electrostatic triboelectric charging characteristics can mean that the foam filter material itself is electrostatically charged by the passing air. In particular, no additional material needs to be applied to the foam filter material in order to achieve the electrostatic triboelectric charging characteristics.

Preferably, the foam filter material is polyurethane-polyether. Such a material can be made fire resistant by an aluminium trihydrate impregnation after the foam material has been provided/manufactured. Less preferably, the foam filter material is polyester. In addition, the foam filter material can be chosen such that particles with a particle size of PM10 as well as particles with a particle size of PM2.5 can be reliably filtered. This can mean that more than a predetermined percentage of said particles is filtered by the proposed air filter, e.g. more than 50%, more than 75%, more than 75% or more than 99%.

The electrostatic effect improves the filtering characteristics of the proposed air filter as any charged particles passing through the electrostatically charged foam element are electrostatically withdrawn from the passing gases and captured on the charged surface regions.

Providing the foam filter material as a material with inherent electrostatic triboelectric charging characteristics advantageously allows an easy provisioning of an air filter. In particular, there is no need for a further manufacturing step in addition to the provision of the foam filter material with a predetermined, desired size. Further, a passive electrostatic air filter can be provided which reduces the energy consumption for filtering.

In a further embodiment, the electric field intensity generated by the air filter during electrostatic charging is dependent on the speed of the air flow passing through the air filter, a cell density and a thickness of the air filter. A cell density can be defined in terms of pores per inch (ppi) which also indicates a permeability of the foam filter material. The cell density and the thickness can be design variables during the design of the air filter. This allows a simple design of the air filter for e.g. a predetermined air flow speed in order to achieve predetermined set static charging characteristics which, in turn, can be determined depending on predetermined set filter characteristics.

In a preferred embodiment, the foam filter element comprises multiple, e.g. at least two or more than two, layers with different cell densities. The higher the ppi value, the higher the cell density and the less the permeability. Two layers with different cell densities can e.g. be adjacent layers with respect to the direction of the air flow through the filter. It is e.g. possible that a first layer has a cell density of 20/2.54 ppc (pores per centimeter) (20 ppi) and a further, in particular adjacent, layer has a cell density of 30/2.54 ppc (30 ppi). Usually, the lower the cell density is, the larger the size of the pores.

Providing at least two layers with different cell densities advantageously allows to efficiently filter particles of different sizes (see above) while minimizing the reduction of the air flow through the filter.

It is, however, possible that the foam filter element comprises only one layer, i.e. is a single layer element.

In a further embodiment, a first layer has a cell density in the range of 10/2.54 ppc (10 ppi) (inclusive) to 30/2.54 ppc (30 ppi) (inclusive), in particular a cell density of 20/2.54 ppc (20 ppi), wherein a further layer has a cell density equal to or higher than 30/2.54 ppc (30 ppi). In particular, the further layer can have a cell density of 45/2.54 ppc (45 ppi). The first layer can provide a pre-filter or coarse filter, wherein the further layer can provide a fine filter.

Providing the at least two layers with said cell densities advantageously allows to further improve the efficiency of filtering particles of different sizes (see above) while minimizing the reduction of the air flow through the filter.

In a further embodiment, for at least one set of two adjacent layers, a further layer with the higher cell density is arranged after a first layer with a lower cell density along an air flow direction through the air filter. In such a filter design, larger particles will be filtered first which also minimizes the risk of clogging the pores of the high cell density layer by said larger particles. This, in turn, increases a lifetime of the proposed air filter.

In a further embodiment, a thickness of a layer with a higher cell density is smaller than a thickness of a layer with a lower cell density. This advantageously allows to provide a balance between the filter retaining capacity and the pressure drop. In this context, a layer with the higher cell density will provide a higher filter retaining capacity than a layer with a lower cell density, wherein a thicker layer will cause a higher pressure drop than a thinner layer. Choosing a thinner layer with a higher density will reduce the total pressure drop across the air filter (which results in desired air flow characteristics through the filter) while still maintaining a desired, i.e. predetermined, filter retaining capacity, i.e. a capacity to retain before the filter is saturated. The layer with the higher cell density can e.g. be a final layer e.g. the layer at the outlet section or providing the outlet section or the layer at the rear surface, and can be provided by the aforementioned fine filter or further layer.

The thickness can be a dimension of the layer or foam filter element along the direction of the air flow through the filter or foam filter element. A width and a height can denote dimensions along directions which are oriented perpendicular to the direction of the air flow and which are also oriented perpendicular with respect to each other.

The proposed layer with a higher cell density can have one of the following thicknesses: 5 mm or 10 mm.

The proposed layer with a lower cell density can have one of the following thicknesses: 10 mm, 20 mm, 35 mm, 40 mm.

The filter can have e. g. one of the following widths: 241 mm, 250 mm, 270 mm, 305 mm, 310 mm, 330 mm, 394 mm, 395 mm, 410 mm, 495 mm.

The filter can have e. g. one of the following lengths: 460 mm, 490 mm, 495 mm, 508 mm, 520 mm, 622 mm, 1230 mm, 2180 mm.

The filter can have e. g. one of the following thicknesses: 10 mm, 30 mm, 45 mm, 48 mm.

It has to be noted, however, that the dimensions of the filter or a layer of the filter is freely adjustable according to a specific application.

In case of a single layer filter, the foam filter element can have a cell density of 30/2.54 ppc (30 ppi) and a thickness of 10 mm. The filter can have a length of 1230 mm, a width of 250 mm and a thickness of 10 mm.

Further, the air filter comprises at least one insulation element for preventing a discharge of the electrostatic charge. This insulation element can be made of material in which electric current does not flow freely. The material can e.g. be non-metal material, in particular foam material. The relative permittivity of the material of the insulation element can be in the range of 1 (inclusive) to 6 (inclusive), preferably in the range of 1 (inclusive) to 2.4 (inclusive). The insulation element can be designed and/or arranged such that a discharge into external elements is prevented.

Further, the at least one insulation element covers side surfaces of the filter or foam filter element completely. Further, the at least insulation element covers side surfaces of a foam block fully, wherein - according to the invention - a front surface and a rear surface are not covered by the at least one insulation element.

The at least one insulation element can be provided as an insulating layer or by a frame element.

Providing an insulation element advantageously improves the electrostatic filtering and the lifetime of the air filter since a polarization which effects the aforementioned withdrawal of particles can be kept constant over a long period of time.

The material of the insulation element is preferably different from the material of the foam filter element. The insulation element separates the foam filter electrically from other elements of the air treatment system.

The insulation element surrounds the foam filter element. This can mean that the foam filter element is fully arranged in an inner volume enclosed by the insulation element. The inner volume can be opened to two different sides, wherein the openings can allow an air flow into and out of the filter element. The insulation element can abut the foam filter element. In particular, the insulation element can abut side surfaces of a filter element. This advantageously provides a reliable prevention of a discharge without impacting the air flow through the filter.

Further, the insulation element is affixed to the foam filter element. Further according to the invention, the insulation element is glued to the foam filter element. This advantageously allows a simple provision of the insulating characteristics for preventing a discharge of the foam filter element. In particular, it is possible to exchange the entity comprising the foam filter element and the insulating element while carrying out maintenance work which e.g. allows an easy replacement.

In addition, the insulation element can be affixed to a filter holder of the air treatment system. The filter holder can be a housing element of the air treatment system and/or provide a frame for holding/supporting the foam filter element. In an embodiment of the invention, the insulation element can e.g. be glued or be mechanically affixed in an alternative manner to the filter holder.

In particular, the at least one insulation element and the foam element are not integrally built. This can mean that the insulation element and the foam filter element can be connected by a detachable connection.

In a further embodiment, it is possible to provide a filter holder such as a frame for holding/supporting the foam filter element, wherein the insulation element is arranged on or attached to the frame. The insulation element can be arranged such that a discharge from the foam filter element into the frame is prevented if the foam filter element is supported by the frame. The frame can be an element of the aforementioned air treatment system.

This advantageously allows a simple production of an exchangeable filter element which does not need to have the aforementioned insulating characteristics. In particular, it is possible to exchange only the foam filter element while carrying out maintenance work, wherein the insulating characteristics are provided by an -additional insulating element on the perimeter of the foam filter.

According to the invention, the at least one insulation element covers the side surfaces of the foam element. This and corresponding advantages have been explained above.

In a further embodiment, the material of the at least one insulation element is polyethylene. The material can be polyethylene foam material, in particular a closed-cell and cross-linked polyethylene foam material, more particular a plastazote (registered trademark) material. In this case, the insulation element can have a block shape or the shape of a sheet.

Alternatively, the material of the at least one insulation element is a ceramic material or a polyester material.

This advantageously allows a simple provision of the insulating element.

In a further embodiment, the air filter comprises at least one charging-improving element or at least one charging-improving coating. In comparison to an air filter according to invention without a charging-improving element or charging-improving coating, such an embodiment provides an improved electrostatic triboelectric charging effect. This can mean that an equal air flow or equal pressure drop will cause a higher static charge for an air filter comprising the at least one charging-improving element or the at least one charging-improving coating in comparison to an air filter according to invention without a charging-improving element or charging-improving coating. The coating can be applied to the foam filter element. The coating can cover a surface of said element. Alternatively or in addition, the material of the foam filter element can be impregnated with the coating.

A charging-improving element can be provided as a charging-improving layer. Moreover, the charging-improving element can be a further foam element which can provide a (further) sub element of the aforementioned foam element comprising at least the foam filter element.

Providing a charging-improving element or at least one charging-improving coating advantageously improves the electrostatic filtering.

In another embodiment, the material of the at least charging improving element or the at least one charging improving coating is an antiviral material. The antiviral material can have particles comprising silver, in particular comprising a composition containing silver, and comprising liposomes. Preferably, the antiviral material has particles comprising silver chloride and/or the liposomes are non-phospholipid vesicles. It is possible that a filter structure of the air filter is impregnated with the antiviral material. The filter structure can comprise a porous material and/or a cellular material.

In a further embodiment, the air filter comprises at least one absorbing element or at least one absorbing coating. The absorbing element or absorbing coating can be odor absorbing, microorganism absorbing or VOC-absorbing. This can mean that more than a predetermined percentage of the odor intensity, the number of microorganisms or VOC particles are filtered by an air filter with such an absorbing element/coating, e.g. more than 50%, more than 75%, more than 75% or more than 99%, or that the percentage is increased in comparison with an air filter according to the invention but not having the absorbing element/coating.

The coating can be applied to the foam filter element. The coating can cover a surface of said element. Alternatively or in addition, the material of the foam filter element can be impregnated with the coating

The absorbing element/coating can be different from the charging-improving element/coating, i.e. provided in addition or alternatively to such a charging improving element/coating. An absorbing element can be provided as an absorbing layer. Moreover, the absorbing element can be a further foam element which can provide a (further) sub element of the aforementioned foam element comprising at least the foam filter element.

In a preferred embodiment, a material of the at least one absorbing element or the absorbing coating is zeolite, in particular a natural zeolite material or a synthetic zeolite material. Zeolite can be provided as a part of a foam material. Zeolite can in particular be impregnated into the foam material.

Alternatively, the material of the at least one absorbing element or the absorbing coating is a volcanic rock material.

Both materials advantageously allow to easily provide an absorbing effect which results in a simple manufacturing process of the air filter. The proposed materials can advantageously provide a POC-, VOC-, CO-, SO2-, NOx- absorbing effect. This can mean that more than a predetermined percentage of said particles are filtered by an air filter with such an absorbing element/coating, e.g. more than 50%, more than 75%, more than 75% or more than 99%, or that the percentage is increased in comparison with an air filter according to the invention but not having the absorbing element/coating.

It is possible that the at least one absorbing element or the absorbing coating also provides the charging improving element or the charging improving coating. In this case, the material of the absorbing element or the absorbing coating can also provide a material with the charging improving effect or the material of the charging improving element or charging improving coating can also provide a material with the absorbing effect.-

In a further or alternative embodiment, the material of the at least absorbing element or the at least one absorbing coating is e. g. an organo-phosphorous compound. Such a compound can have at least one of the following characteristics: a liquid form at 20°C, a colourless to yellowish colour, a pH-value of 4.5 at 20°C, an initial boiling point of 100°C, a melting point/freezing point smaller than 0°C, a density of 1.25-1.26g/cm³ at 20°C, a drying temperature of 120°C to 150°C. It can be fully miscible in/with water. Such an organo-phosphorous compound advantageously provides VOC-absorption properties.

Alternatively, the material of the at least absorbing element or the at least one absorbing coating is e. g. an inorganic compound. Such a compound can have at least one of the following characteristics: a liquid form at 20°C, a specific weight of 1.0g/cm³ at 20°C, a nonionic character, a white colour, a pH-value of 2.5± at 20°C, a density of 1.0g/cm³ at 20°C, a drying temperature above 120°C to 170°C. It can be fully miscible in/with water.

Such an inorganic compound advantageously provides odor-absorption and VOC-absorbing properties.

Further, the air filter can comprise a fire-retardent material, in particular a fire-retardent impregnation.

It is possible that the air filter comprises a foam element with multiple foam sub elements, wherein a sub element can provide a foam filter element, an insulation element, a charging-improving element, an absorbing element, a fire retarding element. The sub elements can be integrally built. This is, however, not mandatory. It is also possible that the foam element is provided by separate sub elements.

Further proposed is a method for manufacturing an air filter for an air treatment system of a vehicle, the method comprising providing at least one foam filter element, wherein the foam filter material is a material with inherent electrostatic triboelectric charging characteristics and providing at least one insulation element for preventing a discharge of the electrostatic charge, in particular according to one of the embodiments disclosed herein. The method is used to provide an air filter according to one of the embodiments disclosed in this invention. Thus, the proposed method can comprise all steps required for providing such a filter element.

In particular, the method can comprise one or more of the following steps:
- providing the foam filter element with layers having different cell densities, in particular according to one of the embodiments disclosed herein,
- providing at least one charging-improving element or at least one charging-improving coating, in particular according to one of the embodiments disclosed herein,
- providing at least one absorbing element or at least one absorbing coating, in particular according to one of the embodiments disclosed herein.

In a further embodiment, the method includes defining a cell density of the air filter material or of a layer material and a thickness of the air filter. As outlined before, this allows a simple manufacturing of the air filter to achieve predetermined filter characteristics, in particular a predetermined filter retaining capacity, a predetermined electric field intensity for electrostatic charging of the air filter and a predetermined pressure drop for a certain air flow speed. Further described is an air treatment system comprising an air filter according to one of the embodiments disclosed herein. The air treatment system can comprise a filter holder for holding the foam filter element or a foam element comprising the filter foam element. The air treatment system, in particular the filter holder, can further comprise an insulation element which is designed and/or arranged such that a discharge of the foam filter element is prevented if the foam filter element is arranged in/on the filter holder and electrostatically charged.

Further described is a vehicle with at least one air filter according to one of the embodiments disclosed herein. The air filter can be an element of an air treatment system of the vehicle.

The invention will be described with reference to the attached figures. The figures show:
- Fig. 1: a schematic side view of an air filter,
- Fig. 2: a schematic side view of an air filter according to a further embodiment,
- Fig. 3: a schematic front view of an air filter according to a further embodiment of the invention,
- Fig. 4: a schematic front view of an air filter according to a further embodiment of the invention,
- Fig. 5: a schematic side view of an air filter according to a further embodiment of the invention,
- Fig. 6: a schematic side view of an air filter according to a further embodiment of the invention, and
- Fig. 7: a schematic side view of an air filter according to a further embodiment of the invention.

In the following, the same reference numerals denote elements with the same or similar technical features.

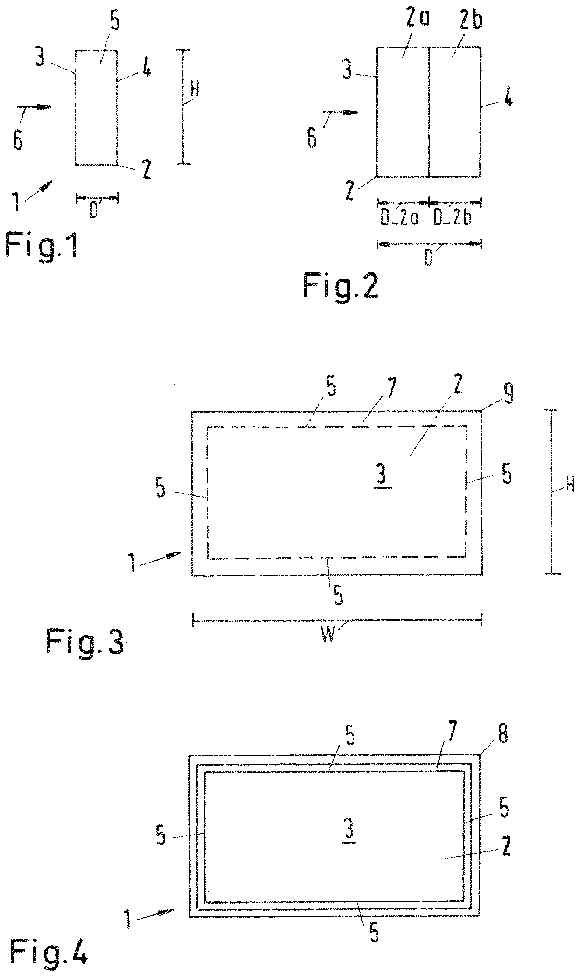

Fig. 1 shows a schematic side view of an air filter 1. The air filter 1 comprises a foam filter element 2 made of a material with inherent electrostatic triboelectric charging characteristics. This means that the friction of air and the surfaces provided by the foam filter element 2 produces patterns of fixed, stable electric charges and no additional coatings or layers is required for this. Preferably, the material is polyurethane-polyether but it is of course possible to use other materials providing the inherent electrostatic triboelectric charging effect.

Indicated is a front surface 3 and a rear surface 4 of the foam filter element 2 which has a block shape. An arrow 6 indicates a direction of an air flow through the air filter 1. In particular, air enters the foam filter element 2 through the front surface 3 and exits the foam filter element 2 through the rear surface 4. A thickness D of the foam filter element 2 can be in the range of 10 mm to 45 mm. Also indicated is a height H which can be in the range of 460 mm to 2180 mm. A width W (see e.g. Fig. 3) can be in the range of 241 mm to 495 mm. A cell density of the foam filter element 2 can be in the range of 20/2.54 ppc (20 ppi) to 45/2.54 ppc (45 ppi).

Fig. 1 shows a single layer foam filter element 2, wherein a thickness D can be 10 mm, the height H can be 1230 mm and the width W can be 250 mm. A cell density of the single layer element 2 can be 30/2.54 ppc (30 ppi). Alternatively, a height H can be 2180 mm and the width W can be 410 mm. A cell density of the single layer element 2 can be 45/2.54 ppc (45 ppi).

Fig. 2 shows a schematic side view of an air filter 1 according to a further embodiment. The air filter 1 comprises a foam filter element 2 with a first layer 2a and a further layer 2b. Along the direction 6 of the air flow through the foam filter element 2, the further layer 2b is arranged after/behind and preferably adjacent to the first layer 2a. The first layer 2a e. g. has a cell density in the range of 10/2.54 ppc (10 ppi) (inclusive) to 30/2.54 ppc (30 ppi) (inclusive), wherein a further layer 2b e. g. has a cell density higher than 30/2.54 ppc (30 ppi), in particular 45/2.54 ppc (45 ppi). More general, a cell density of the first layer 2a is lower that a cell density of the further layer 2b. A thickness D_2a of the first layer 2a is higher than a thickness D_2b of the second layer 2b.

The thickness D_2a can e.g. be 20 mm, 35 mm or 40 mm and the thickness D_2b can e.g. be 5 mm, 10 mm.

Fig. 3 shows a schematic front view of an air filter 1 according to a further embodiment of the invention. In addition to the foam filter element 2, the air filter 1 comprises an insulation element 7 for preventing a discharge of the electrostatic charge of the foam filter element 2. It is shown that the insulation element 7 and the foam filter element 2 are affixed to one another. In particular, the insulation element 7 can be made of a foam material. The foam material can e.g. be polyethylene. It is possible that an element 9 comprises or provides both, the foam filter element 2 and the insulation element 7, wherein both elements 2, 7 can be made of foam material.

Further, the insulation element 7 covers the side surfaces 5 but not the front and the rear surface 3, 4 of the foam filter element 2.

Fig. 4 shows a schematic front view of an air filter 1 according to a further embodiment of the invention. In addition to the foam filter element 2, the air filter 1 comprises an insulation element 7 for preventing a discharge of the electrostatic charge of the foam filter element 2. It is shown that the insulation element 7 and the foam filter element 2 are not integrally built. In particular, the insulation element 7 can be made of a ceramic material or a GPO3 material, i.e. a glass reinforced polyester material. Further shown is a filter holder 8, e.g. a filter frame. The filter holder 8 has a rectangular shape in cross section plane which is oriented perpendicular to the air flow direction 6. The insulation element 7 is attached to inner surfaces of the filter holder 8. The foam filter element 2 is arranged in an inner volume enclosed by the entity of filter holder 8 and insulation element 7. The insulation element 7 can be affixed to the filter holder 8 and/or to the foam filter element 2. In the case that the insulation element 7 is not affixed to the foam filter element 2, it can be arranged such that it abuts the foam filter element 2.

The insulation element 7 is arranged such that it covers the side surfaces 5 but not the front and the rear surface 3, 4 of the foam filter element 2.

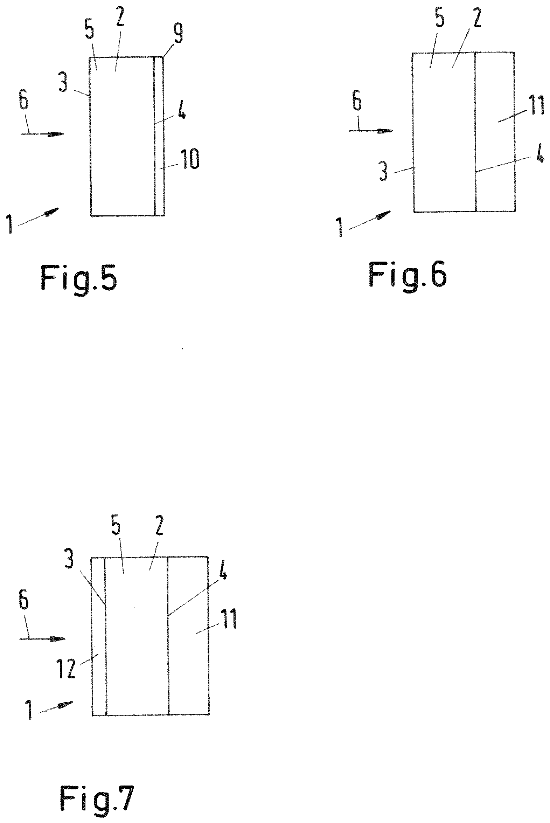

Fig. 5 shows a schematic side view of an air filter 1 according to a further embodiment of the invention. In addition to the foam filter element 2, the air filter 1 comprises a charging-improving coating 10 which is arranged on the clean side of the air filter 1, e.g. on the rear surface 4 of the foam filter element 2. The at least one charging-improving coating 10 is made of a silver additive. In particular, the charging-improving coating 10 can be made of an antiviral material, wherein the antiviral material can comprise particles comprising silver chloride and/or liposomes that are non-phospholipid vesicles.

Fig. 6 shows a schematic side view of an air filter 1 according to a further embodiment of the invention. In addition to the foam filter element 2, the air filter 1 comprises a charging-improving element 11 which is arranged on the clean side (downstream side) of the air filter 1, e.g. on the rear surface 4 of the foam filter element 2. The at least one charging-improving element 11 is made of a zeolite. The charging-improving element 11 can be a foam element. In this case a foam element 9 comprises or provides both, the foam filter element 2 and the charging-improving element 11.

It is, of course possible, that an air filter 1 comprises the foam filter element 2, the insulation element 7 and the charging-improving element 11. In this case, a foam element 9 can comprise or provide all, the foam filter element 2, the insulation element 7 and the charging-improving element 11. In these embodiments, it is possible that the insulation element 7 covers the side surfaces of the entity of the foam filter element 2 and the charging-improving element 11.

Fig. 7 shows a schematic side view of an air filter 1 according to a further embodiment of the invention. In addition to the foam filter element 2, the air filter 1 comprises a charging-improving element 11 which is arranged on the clean side of the air filter 1, e.g. on the rear surface 4 of the foam filter element 2, and at least one absorbing coating 12 which is arranged on the dirty side of the air filter 1, e.g. on the front surface 3 of the foam filter element 2. The at least one absorbing coating 12 is made of an organo-phosphorous compound or an inorganic compound or zeolite or volcanic rock material. The air filter 1 can also comprise an antiviral material including silver and, where applicable, liposomes (not shown).

### Reference list

- 1: air filter
- 2: foam filter element
- 2a: first layer
- 2b: further layer
- 3: front surface
- 4: rear surface
- 5: side surface
- 6: air flow direction
- 7: insulation element
- 8: filter holder
- 9: foam element
- 10: charging-improving coating
- 11: charging-improving element
- 12: absorbing coating
- W: width
- H: height
- D: thickness
- D_2a: thickness
- D_2b: thickness

## Claims

1. Air filter for an air treatment system, the air filter (1) comprising at least one foam filter element (2), wherein the foam filter material is or comprises a material with inherent electrostatic triboelectric charging characteristics, wherein the air filter (1) comprises at least one insulation element (7) for preventing a discharge of the electrostatic charge, wherein the insulation element (7) is affixed to the foam filter element (2), wherein the insulation element (7) surrounds the foam filter element (2), wherein the at least one insulation element (7) covers side surfaces (5) of the foam filter element fully,
**characterized in that**
a front surface (3) and a rear surface (4) of the foam filter are not covered by the at least one insulation element (7), wherein the insulation element (7) is glued to the foam filter element (2).

2. The air filter according to claim 1, **characterized in that** the electric field intensity generated by the air filter (1) is dependent on the speed of the air flow passing through the air filter (1), a cell density of the air filter (1) material and a thickness of the air filter (1).

3. The air filter according to claim 1 or 2, **characterized in that** the foam filter element (2) comprises multiple layers (2a, 2b) with different cell densities.

4. The air filter according to claim 3, **characterized in that** a first layer (2a) has a cell density in the range of 10/2.54 ppc (10 ppi) (inclusive) to 30/2.54 ppc (30 ppi) (inclusive), wherein a further layer (2b) has a cell density equal to or higher than 30/2.54 ppc (30 ppi) and/or that for at least one set of two adjacent layers (2a, 2b), a layer (2b) with the higher cell density is arranged after a layer (2b) with the lower cell density along an air flow direction (6) through the air filter (1).

5. The air filter according to claim 3 or 4, **characterized in that** a thickness (D_2b) of a layer (2b) with a higher cell density is smaller than a thickness (D_2a) of a layer (2a) with a lower cell density.

6. The air filter according to one of the preceding claims, **characterized in that** a filter holder is a frame for holding the foam filter element (2), wherein the insulation element (7) is arranged on or attached to the frame.

7. The air filter according to one of the preceding claims, **characterized in that** the material of the at least one insulation element (7) is polyethylene or a ceramic material or a polyester material.

8. The air filter according to one of the preceding claims, **characterized in that** the air filter (1) comprises at least one charging-improving element (11) or at least one charging-improving coating (10) and/or the air filter (1) comprises at least one absorbing element or at least one absorbing coating (12).

9. The air filter of claim 8, **characterized in that** the material of the at least charging improving element (11) or the at least one charging improving coating (10) is an antiviral material.

10. The air filter according to claim 8 or 9, characterized that the material of the at least absorbing element or the at least one absorbing coating (12) is an organo-phosphorous compound or an inorganic compound and/or a material of the at least one charging-improving element (11) or the charging improving coating (10) is zeolite or a volcanic rock material.

11. The air filter according to one of the preceding claims , **characterized in that** the insulation element (7) is attached to inner surfaces of the filter holder and/or the insulation element (7) is glued to the filter holder.

12. A method for manufacturing an air filter (1) for an air treatment system according to one of the preceding claims, the method comprising providing at least one foam filter element (2), wherein the foam filter material is or comprises a material with inherent electrostatic triboelectric charging characteristics.

13. The method according to claim 12, **characterized in that** the method includes defining a cell density of the air filter (1) material or of a layer (2a, 2b) material and a thickness of the air filter (1) or of a layer (2a, 2b).

## Patentansprüche

1. Luftfilter für ein Luftaufbereitungssystem, wobei der Luftfilter (1) mindestens ein Schaumstofffilterelement (2) umfasst, wobei das Schaumstofffiltermaterial ein Material mit inhärenten elektrostatischen triboelektrischen Aufladungseigenschaften ist oder ein solches Material umfasst, wobei der Luftfilter (1) mindestens ein Isolierelement (7) umfasst, um eine Entladung der elektrostatischen Ladung zu verhindern, wobei das Isolierelement (7) an dem Schaumfilterelement (2) befestigt ist, wobei das Isolierelement (7) das Schaumfilterelement (2) umgibt, wobei das mindestens eine Isolierelement (7) Seitenflächen (5) des Schaumstofffilterelements vollständig bedeckt,
**dadurch gekennzeichnet, dass** eine Vorderseite (3) und eine Rückseite (4) des Schaumstofffilters nicht von dem mindestens einen Isolierelement (7) bedeckt sind, wobei das Isolierelement (7) an das Schaumstofffilterelement (2) geklebt ist.

2. Luftfilter nach Anspruch 1, **dadurch gekennzeichnet, dass** die vom Luftfilter (1) erzeugte elektrische Feldstärke abhängig ist von der Geschwindigkeit der durch den Luftfilter (1) strömenden Luft, einer Zelldichte des Materials des Luftfilters (1) und einer Dicke des Luftfilters (1).

3. Luftfilter nach Anspruch 1 oder 2, **dadurch gekennzeichnet, dass** das Schaumstofffilterelement (2) mehrere Schichten (2a, 2b) mit unterschiedlichen Zelldichten umfasst.

4. Luftfilter nach Anspruch 3, **dadurch gekennzeichnet, dass** eine erste Schicht (2a) eine Zelldichte im Bereich von 10/2,54 ppc (10 ppi) (einschließlich) bis 30/2,54 ppc (30 ppi) (einschließlich) aufweist, wobei eine weitere Schicht (2b) eine Zelldichte von mindestens 30/2,54 ppc (30 ppi) aufweist und/oder dadurch dass bei mindestens einem Satz von zwei benachbarten Schichten (2a, 2b) eine Schicht (2b) mit der höheren Zelldichte hinter einer Schicht (2b) mit der niedrigeren Zelldichte entlang einer Luftströmungsrichtung (6) durch den Luftfilter (1) angeordnet ist.

5. Luftfilter nach Anspruch 3 oder 4, **dadurch gekennzeichnet, dass** eine Dicke (D_2b) einer Schicht (2b) mit höherer Zelldichte kleiner ist als eine Dicke (D_2a) einer Schicht (2a) mit geringerer Zelldichte.

6. Luftfilter nach einem der vorstehenden Ansprüche, **dadurch gekennzeichnet, dass** ein Filterhalter ein Rahmen zum Halten des Schaumstofffilterelements (2) ist, wobei das Isolierelement (7) an dem Rahmen angeordnet oder an diesem befestigt ist.

7. Luftfilter nach einem der vorstehenden Ansprüche, **dadurch gekennzeichnet, dass** das Material des mindestens einen Isolierelements (7) Polyethylen oder ein keramisches Material oder ein Polyestermaterial ist.

8. Luftfilter nach einem der vorstehenden Ansprüche, **dadurch gekennzeichnet, dass** der Luftfilter (1) mindestens ein aufladungsverbesserndes Element (11) oder mindestens eine aufladungsverbessernde Beschichtung (10) umfasst und/oder der Luftfilter (1) mindestens ein absorbierendes Element oder mindestens eine absorbierende Beschichtung (12) umfasst.

9. Luftfilter nach Anspruch 8, **dadurch gekennzeichnet, dass** das Material des mindestens aufladungsverbessernden Elements (11) oder der mindestens einen aufladungsverbessernden Beschichtung (10) ein antivirales Material ist.

10. Der Luftfilter nach Anspruch 8 oder 9, **dadurch gekennzeichnet, dass** das Material des mindestens einen absorbierenden Elements oder der mindestens einen absorbierenden Beschichtung (12) eine organische Phosphorverbindung oder eine anorganische Verbindung ist und/oder ein Material des mindestens einen ladungsverbessernden Elements (11) oder der ladungsverbessernden Beschichtung (10) Zeolith oder ein vulkanisches Gesteinsmaterial ist.

11. Luftfilter nach einem der vorstehenden Ansprüche, **dadurch gekennzeichnet, dass** das Isolierelement (7) an Innenflächen des Filterhalters befestigt ist und/oder das Isolierelement (7) mit dem Filterhalter verklebt ist.

12. Verfahren zur Herstellung eines Luftfilters (1) für ein Luftaufbereitungssystem gemäß einem der vorstehenden Ansprüche, wobei das Verfahren das Bereitstellen mindestens eines Schaumstofffilterelements (2) umfasst, wobei das Schaumstofffiltermaterial ein Material mit inhärenten elektrostatischen triboelektrischen Aufladungseigenschaften ist oder ein solches umfasst.

13. Verfahren nach Anspruch 12, **dadurch gekennzeichnet, dass** das Verfahren das Festlegen einer Zelldichte des Luftfiltermaterials (1) oder des Materials einer Schicht (2a, 2b) und einer Dicke des Luftfilters (1) oder einer Schicht (2a, 2b) umfasst.

## Revendications

1. Filtre à air pour un système de traitement d'air, le filtre à air (1) comprenant au moins un élément filtrant en mousse (2), le matériau filtrant en mousse étant un matériau présentant des propriétés inhérentes de charge électrostatiques triboélectriques ou comprenant un tel matériau, dans lequel le filtre à air (1) comprend au moins un élément isolant (7) destiné à empêcher une décharge de la charge électrostatique, l'élément isolant (7) étant fixé à l'élément filtrant en mousse (2), l'élément isolant (7) entourant l'élément filtrant en mousse (2), ledit au moins un élément isolant (7) recouvre entièrement des faces latérales (5) de l'élément filtrant en mousse,
**caractérisé en ce qu'**une face avant (3) et une face arrière (4) du filtre en mousse ne sont pas recouvertes par ledit au moins un élément isolant (7), l'élément isolant (7) étant collé à l'élément filtrant en mousse (2).

2. Filtre à air selon la revendication 1, **caractérisé en ce que** l'intensité du champ électrique généré par le filtre à air (1) dépend de la vitesse de l'air traversant le filtre à air (1), d'une densité cellulaire du matériau du filtre à air (1) et d'une épaisseur du filtre à air (1).

3. Filtre à air selon la revendication 1 ou 2, **caractérisé en ce que** l'élément filtrant en mousse (2) comprend plusieurs couches (2a, 2b) présentant des densités de cellulaires différentes.

4. Filtre à air selon la revendication 3, **caractérisé en ce qu'**une première couche (2a) présente une densité cellulaire comprise entre 10/2,54 ppc (10 ppi) (inclus) et 30/2,54 ppc (30 ppi) (inclus), dans lequel une autre couche (2b) présentant une densité de cellules d'au moins 30/2,54 ppc (30 ppi) et/ou **en ce que**, pour au moins un ensemble de deux couches adjacentes (2a, 2b), une couche (2b) présentant la densité de cellules plus élevée est disposée derrière une couche (2b) présentant la densité de cellules plus faible, le long d'une direction d'écoulement d'air (6) à travers le filtre à air (1).

5. Filtre à air selon la revendication 3 ou 4, **caractérisé en ce que** une épaisseur (D_2b) d'une couche (2b) présentant une densité de cellules plus élevée est inférieure à un e épaisseur (D_2a) d'une couche (2a) présentant une densité de cellules plus faible.

6. Filtre à air selon l'une des revendications précédentes, **caractérisé en ce qu'**un support de filtre est constitué d'un cadre destiné à maintenir l'élément filtrant en mousse (2), l'élément isolant (7) étant disposé sur le cadre ou fixé à celui-ci.

7. Filtre à air selon l'une des revendications précédentes, **caractérisé en ce que** le matériau dudit au moins un élément isolant (7) est du polyéthylène, un matériau céramique ou un matériau polyester.

8. Filtre à air selon l'une des revendications précédentes, **caractérisé en ce que** le filtre à air (1) comprend au moins un élément améliorant la charge (11) ou au moins un revêtement améliorant la charge (10) et/ou le filtre à air (1) comprend au moins un élément absorbant ou au moins un revêtement absorbant (12).

9. Filtre à air selon la revendication 8, **caractérisé en ce que** le matériau dudit au moins élément améliorant la charge (11) ou dudit au moins un revêtement améliorant la charge (10) est un matériau antiviral.

10. Filtre à air selon la revendication 8 ou 9, **caractérisé en ce que** le matériau du au moins un élément absorbant ou du au moins un revêtement absorbant (12) est un composé organique du phosphore ou un composé inorganique et/ou **en ce qu'**un matériau du au moins un élément améliorant la charge (11) ou du revêtement améliorant la charge (10) est la zéolite ou un matériau de roche volcanique.

11. Filtre à air selon l'une des revendications précédentes, **caractérisé en ce que** l'élément isolant (7) est fixé à des surfaces intérieures du support de filtre et/ou **en ce que** l'élément isolant (7) est collé au support de filtre.

12. Procédé de fabrication d'un filtre à air (1) destiné à un système de traitement d'air selon l'une des revendications précédentes, ledit procédé comprenant la mise à disposition d'au moins un élément filtrant en mousse (2), le matériau filtrant en mousse étant un matériau présentant des propriétés inhérentes de charge triboélectrique électrostatique ou comprenant un tel matériau.

13. Procédé selon la revendication 12, **caractérisé en ce qu'**il comprend la détermination d'une densité cellulaire du matériau de filtre à air (1) ou du matériau d'une couche (2a, 2b), ainsi que d'une épaisseur du filtre à air (1) ou d'une couche (2a, 2b).
